Europäisches Patentamt

European Patent Office

Office européen des brevets

(19)

(11) Veröffentlichungsnummer : **0 425 529 B1**

# (12) EUROPÄISCHE PATENTSCHRIFT

(45) Veröffentlichungstag der Patentschrift :
21.10.92 Patentblatt 92/43

(51) Int. Cl.⁵ : **G01D 5/22**

(21) Anmeldenummer : **89907663.2**

(22) Anmeldetag : **11.07.89**

(86) Internationale Anmeldenummer :
**PCT/DE89/00455**

(87) Internationale Veröffentlichungsnummer :
**WO 90/01145 08.02.90 Gazette 90/04**

(54) **MESSEINRICHTUNG ZUR BESTIMMUNG EINES DREHWINKELS.**

(30) Priorität : **20.07.88 DE 3824535**

(43) Veröffentlichungstag der Anmeldung :
**08.05.91 Patentblatt 91/19**

(45) Bekanntmachung des Hinweises auf die
Patenterteilung :
**21.10.92 Patentblatt 92/43**

(84) Benannte Vertragsstaaten :
**DE FR GB IT SE**

(56) Entgegenhaltungen :
**EP-A- 0 178 972**
**DE-A- 3 307 105**

(56) Entgegenhaltungen :
**DE-B- 1 260 802**
**FR-A- 2 276 559**
**GB-A- 2 054 160**
**US-A- 4 255 975**
**US-A- 4 406 999**
**US-A- 4 752 732**

(73) Patentinhaber : **ROBERT BOSCH GMBH**
**Postfach 30 02 20**
**W-7000 Stuttgart 30 (DE)**

(72) Erfinder : **DOBLER, Klaus**
**Bettäckerstr. 12**
**W-7016 Gerlingen (DE)**
Erfinder : **HACHTEL, Hansjörg**
**Buchenstr. 4**
**W-7251 Weissach (DE)**

EP 0 425 529 B1

## Beschreibung

### Stand der Technik

Die Erfindung geht aus von einer Meßeinrichtung zur Bestimmung des Drehwinkels nach dem ersten Teil von Anspruch 1. Bei einer 2.B. aus der DE-A-3307105 bekannten Meßeinrichtung wird die Verdrehung einer Welle mit Hilfe zweier relativ zueinander bewegter, konzentrisch angeordneter Hülsen bestimmt. Eine der Hülsen weist zwei Reihen gegeneinander versetzter Schlitze auf, die den elektrisch nicht leitenden Bereich bilden. In der anderen Hülse ist eine Reihe durchgehender, ebenfalls in Richtung zur Hülsenachse verlaufender Schlitze ausgebildet. Im Bereich der beiden Schlitzreihen der ersten Hülse ist mindestens je eine von einem hochfrequenten Wechselstrom durchflossene Spule angeordnet. Durch die relative tangentiale Verschiebung der beiden Hülsen zueinander wird die elektrisch nicht leitende Fläche der Hülsen, d.h. die Öffnungsfläche der Schlitze verändert, wodurch die Dämpfung der Spulen variiert wird. Die Meßeinrichtung hat den Nachteil, daß nur kleine Drehwinkel meßbar sind.

### Vorteile der Erfindung

Die erfindungsgemäße Meßeinrichtung mit den Merkmalen des Anspruchs 1 hat demgegenüber den Vorteil, daß sie relativ klein baut und Meßwinkel bis 180° möglich sind. Wegen der halbkreisförmigen Ausgestaltung des Spulenkörpers kann der Durchmesser des Sensors klein sein. Der Spulenkörper ist fertigungsgerecht ausgebildet, so daß die Spule relativ einfach gewickelt werden kann und eine einfache Gesamtmontage des Sensors möglich ist. Bereits Spulen mit einer Gesamtbreite von 1 bis 2 mm liefern ein relativ hohes Meßsignal. Die vom axialen Spiel des Spulenkörpers bzw. des Meßteils verursachten Meßfehler bilden sich nicht oder nur vernachlässigbar gering aus. Da die Spulen in einer Kompensationsschaltung zusammengefaßt sind, ist die temperaturabhängige Geber-Offsetdrift gering.

Durch die in den abhängigen Ansprüchen aufgeführten Maßnahmen sind vorteilhafte Weiterbildungen der im Anspruch 1 angegebenen Meßeinrichtung möglich.

### Zeichnung

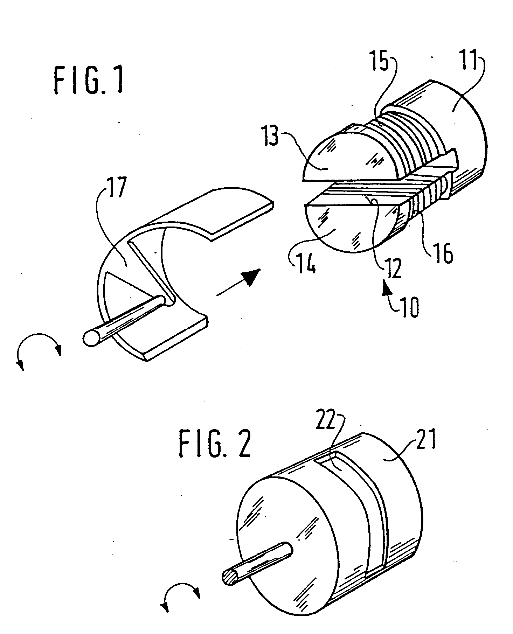

Ausführungsbeispiele der Erfindung sind in der Zeichnung dargestellt und in der nachfolgenden Beschreibung näher erläutert. Es zeigen die Figur 1 die Meßeinrichtung in einer Explosionsdarstellung und Figur 2 eine Abwandlung des Meßteils.

### Beschreibung der Ausführungsbeispiele

In Figur 1 ist mit 10 ein Sensor bezeichnet, der einen zylinderförmigen Spulenkörper 11 aufweist. Dieser ist aus einem Vollzylinder aus vorzugsweise elektrisch nicht leitendem Material hergestellt, in dem von einer Stirnseite her eine mittige Längsnut 12 ausgebildet ist. Dadurch entstehen zwei im Querschnitt halbkreisförmige Kerne 13, 14, auf die je eine Spule 15, 16 gewickelt ist. Die Spulen 15, 16 sind in Umfangsrichtung des Spulenkörpers 11 gewickelt. Um den Spulenkörper 11 herum ist mit einem geringen Abstand ein aus metallischem, elektrisch leitendem und/oder aus ferromagnetischem Stoff bestehendes Meßteil 17 angeordnet, das als Hülsensegment ausgebildet ist und etwa in Umfangsrichtung gesehen den halben Umfang des Spulenkörpers überdeckt. Die Länge des Meßteils 17 sollte vorzugsweise mindestens die Breite der Spulen 15 bzw. 16 aufweisen. Das Meßteil 17 ist mit einem nicht dargestellten Bauteil verbindbar, dessen Drehbewegung bestimmt werden soll.

In Ausgangsstellung ist das Meßteil 17 so ausgerichtet, daß es beide Spulen 15, 16 mit gleich großen Flächen überdeckt. Der Sensor 10 kann nach dem induktiven oder nach dem Wirbelstrommeßprinizp arbeiten. Beim Wirbelstrommeßprinzip werden die Spulen 15, 16 von einem hochfrequenten Wechselstrom durchflossen. Zur Messung wird das Meßteil 17 um den Spulenkörper 11 herum gedreht. An den Spulen 15, 16 entsteht ein magnetisches Wechselfeld, das auf der metallischen Oberfläche des Meßteils 17 Wirbelströme bewirkt. Je größer dabei die vom Magnetfeld durchsetzte Fläche des Meßteils 17 ist, desto mehr Wirbelströme werden erzeugt. Ferner ist die Größe der erzeugten Wirbelströme abhängig vom verwendeten Material des Meßteils 17, insbesondere dessen Oberfläche, sowie vom Abstand der Spulen 15 bzw. 16 zu den Oberflächen des Meßteils 17. Durch die erzeugten Wirbelströme wird der Spulen-Wechselstromwiderstand verringert, was zur Meßsignalgewinnung ausgenützt wird. Bei der Drehbewegung des Meßteils 17 wird jeweils die den jeweiligen Spulen 15 bzw. 16 zugeordnete Größe des Meßteils 17 verändert. Dadurch wird die der Spule 15 zugeordnete Oberfläche des Meßteils 17 um denselben Betrag erhöht, wie sie in der anderen Spule 16 verringert wird. Die beiden Spulen 15, 16 sind dabei in einer Wheatstone'schen Halbbrückenschaltung verschaltet. Dadurch kompensieren sich die in den Spulen 15, 16 gleichzeitig auftretenden und gleichsinnig wirkenden Meßfehler. Ist die Breite der Spulen 15, 16 größer oder auch kleiner als die Breite des Meßteils 17, so wirkt sich ein durch den Einbau verursachtes Axialspiel praktisch nicht, oder nur sehr geringfügig als Fehler im Meßsignal aus.

Selbstverständlich ist es auch möglich, statt mit zwei Spulen z.B. vier oder eine andere größere Anzahl von Spulen zu verwenden, wodurch kleinere Meßwinkel bestimmt werden können. Hierzu ist im Spulenkörper senkrecht zur Längsnut 12 eine zweite Längsnut auszubilden, so daß vier Segmente entstehen auf die jeweils eine Spule gewickelt ist. Diese vier Spulen sind in einer Wheatstone'schen Brükkenschaltung verschaltet. Das Meßteil sollte dann vorzugsweise so ausgebildet sein, daß in Ausgangsstellung jede Spule zur Hälfte überdeckt ist.

Soll die Spulenzahl noch weiter erhöht werden, so ist entsprechend die Anzahl der Längsnuten zu erhöhen, so daß z.B. eine sternförmige Anordnung der Längsnuten entsteht. Das Meßteil 17 kann eine Drehbewegung um 360° ausführen. Der eigentliche Meßbereich ist aber ungefähr auf die tangentiale Länge der Spulen begrenzt und wiederholt sich in der Form einer Dreieckspannung abhängig von der Anzahl der Spulen immer wieder.

Im Ausführungsbeispiel nach der Figur 2 ist das Meßteil als topfförmiger Körper 21 mit einem Fenster 22 in der Seitenwand ausgebildet. Das Fenster 22 ist in Umfangsrichtung gesehen so lang, daß es den halben Umfang des Spulenkörpers 11 umfaßt. Die Wirkungsweise entspricht der des Ausführungsbeispiels nach Figur 1. Das topfförmige Meßteil 21 kann so gestaltet werden, daß sein Innendurchmesser mit dem Außendurchmesser des Spulenkörpers 11 ein solches Spiel ausbildet, daß sich die Teile leicht gegeneinander verdrehen. Gleichzeitig muß jedoch das Radialspiel so eingeengt sein, daß Radialfehler nur einen vernachlässigbar geringen Einfluß auf das Meßergebnis ausüben. Voraussetzung dafür ist, daß die Durchmesser der halbkreisförmigen Spulen 15, 16 kleiner sind als der Durchmesser des Spulenträgers 11.

Vorteil dieser Variante ist die sehr einfache Bauweise und Montage solcher Sensoren, da das Meßteil 21 auf dem Spulenträger 11 gleitet (Gleitlagerprinzip).

Auch ist es bei der Ausbildung nach Figur 2 möglich, den Körper 21 aus nicht leitendem Material herzustellen und statt des Fensters 22 einen Bereich aus elektrisch leitendem Material vorzusehen. Dadurch können besonders gut die Vorteile der Gleitlagerung mit der Meßeinrichtung nach Figur 1 kombiniert werden.

**Patentansprüche**

1. Meßeinrichtung (10) zur berührungsfreien Bestimmung eines Drehwinkels eines Bauteils mit Hilfe zweier relativ zueinander bewegter Körper (11, 17) und mit Sensorspulen (15, 16), deren Wechselstromwiderstandswerte durch die relative Veränderung der Größe der den Spulen zugeordneten aus elektrisch leitendem und/oder ferromagnetischem Material bestehenden Bereiche der Körper (11, 17) variiert wird, dadurch gekennzeichnet, daß ein erster Körper (11) im wesentlichen zylindrische Außenkontur aufweist, die mit der Innenkontur eines um den ersten Körper (11) herum angeordneten zweiten Körpers (17) korrespondiert, daß der erste Körper (11) in eine Anzahl von geometrisch gleich ausgebildeten Teilkörpern (13, 14) unterteilt ist, auf denen je mindestens eine Spule (15, 16) angeordnet ist, daß die Achsen der Spulen (15, 16) und der Teilkörper (13, 14) parallel zur Achse des ersten Körpers (11) verlaufen, und daß der zweite Körper (17) mindestens einen Bereich aus elektrisch leitendem und/oder ferromagnetischem Material aufweist, der mindestens teilweise die diesem Bereich zugewandte Oberfläche der Spule(n) (15, 16) eines Teilkörpers (13, 14) überdeckt.

2. Meßeinrichtung nach Anspruch 1, dadurch gekennzeichnet, daß die Spulen (15, 16) gewickelt sind.

3. Meßeinrichtung nach Anspruch 1 und/oder 2, dadurch gekennzeichnet, daß der erste Körper (11) ein Vollzylinder ist, der einen mittigen Längsschlitz (12) aufweist, und daß um die so gebildeten Teilkörper (13, 14) herum je mindestens eine Spule (15, 16) gewickelt ist

4. Meßeinrichtung nach einem der Ansprüche 1 bis 3, dadurch gekennzeichnet, daß der zweite Körper (17) rohrförmig ausgebildet ist und ein Fenster (22) aufweist.

5. Meßeinrichtung nach Anspruch 4, dadurch gekennzeichnet, daß der zweite Körper (17) aus nicht elektrisch leitendem Material besteht und sich im Fenster (22) ein elektrisch leitendes Material befindet.

6. Meßeinrichtung nach einem der Ansprüche 1 bis 5, dadurch gekennzeichnet, daß der zweite Körper (17) aus einer halbschale besteht.

7. Meßeinrichtung nach einem der Ansprüche 1 bis 6, dadurch gekennzeichnet, daß die Spulen (15, 16) in einer Wheatstone'schen Brückenschaltung verschaltet sind.

**Claims**

1. Measuring device (10) for the contactless determination of an angle of rotation of a component with the aid of two members (11, 17) moving relative to one another, and having sensor coils (15, 16) whose impedance values is [sic] varied by the relative variation in the magnitude of the regions of the members (11, 17), which regions are assigned to the coils and consist of electrically conductive and/or ferromagnetic material, characterised in that a first member (11) has an essentially cylindrical outer contour which corresponds to the inner contour of a second member (17) arranged about the first member (11), in that the first member (11) is subdivided into a number of component members (13, 14) of identical geometrical construction on which at least one coil (15, 16) is arranged in each case, in that the axes of the coils (15, 16) and of the component members (13, 14) extend parallel to the axis of the first member (11), and in that the second member (17) has at least one region made from electrically conductive and/or ferromagnetic material which covers at least partially the surface, facing this region, of the coil(s) (15, 16) of a component member (13, 14).

2. Measuring device according to Claim 1, characterised in that the coils (15, 16) are wound.

3. Measuring device according to Claim 1 and/or 2, characterised in that the first member (11) is a solid cylinder which has a central longitudinal slot (12), and in that at least one coil (15, 16) is wound in each case about the component member (13, 14) thus formed.

4. Measuring device according to one of Claims 1 to 3, characterised in that the second member (17) is of tubular construction and has a window (22).

5. Measuring device according to Claim 4, characterised in that the second member (17) consists of electrically non-conductive material, and an electrically conductive material is situated in the window (22).

6. Measuring device according to one of Claims 1 to 5, characterised in that the second member (17) consists of a half shell.

7. Measuring device according to one of Claims 1 to 6, characterised in that the coils (15, 16) are connected in a Wheatstone bridge circuit.

**Revendications**

1) Dispositif de mesure (10) pour la détermination sous contact de l'angle de rotation d'un organe, au moyen de deux éléments en mouvement relatif (11,17) et de deux bobines détectrices (15, 16) dont les impédances varient par modification relative des grandeurs des zones des éléments (11, 17) associées aux bobines et faites d'un matériau conducteur électrique et/ou ferromagnétique, caractérisé en ce que le premier élément (11) a une surface externe essentiellement cylindrique, correspondant à la surface interne d'un second élément (17) disposé autour de lui, le premier élément (11) étant divisé en un certain nombre de parties (13, 14) géométriquement identiques, dont chacune porte au moins une bobine (15, 16), les axes des bobines (15, 16) et des parties (13, 14) étant parallèles à l'axe du premier élément (11), tandis que le second élément (17) présente au moins une zone faite d'un matériau conducteur électrique et/ou ferromagnétique recouvrant au moins en partie la surface qui lui fait face, des bobines (15, 16) portées par les parties (13, 14).

2) Dispositif de mesure selon la revendication 1, caractérisé en ce que les bobines (15, 16) sont réalisées par enroulement.

3) Dispositif de mesure selon la revendication 1 et/ou la revendication 2, caractérisé en ce que le premier élément (11) est un cylindre plein qui présente une encoche longitudinale médiane (12), au moins une bobine (15, 16) étant réalisée par bobinage sur chacune des parties (13, 14) ainsi formées.

4) Dispositif de mesure selon une des revendications 1 à 3, caractérisé en ce que le second élément (17) a une forme tubulaire et comporte une fenêtre (22).

5) Dispositif de mesure selon la revendication 4, caractérisé en ce que le deuxième élément (17) est fait d'un matériau isolant électrique et porte, dans la fenêtre (22) un matériau conducteur de l'électricité.

6) Dispositif de mesure selon une des revendication 1 à 5, caractérisé en ce que le second élément (17) est une demi-coquille.

7) Dispositif de mesure selon une des revendications 1 à 6, caractérisé en ce que les bobines (15, 16) sont accouplées dans un montage en pont de Wheatstone.

FIG.1

FIG. 2